Europäisches Patentamt

European Patent Office

Office européen des brevets

(19)

(11) **EP 0 848 520 A1**

(12) **EUROPÄISCHE PATENTANMELDUNG**

(43) Veröffentlichungstag:
17.06.1998 Patentblatt 1998/25

(51) Int. Cl.6: **H04L 12/40**

(21) Anmeldenummer: 97119136.6

(22) Anmeldetag: 03.11.1997

(84) Benannte Vertragsstaaten:
AT BE CH DE DK ES FI FR GB GR IE IT LI LU MC
NL PT SE
Benannte Erstreckungsstaaten:
AL LT LV MK RO SI

(30) Priorität: 28.11.1996 DE 19649258

(71) Anmelder:
Lucent Technologies Network Systems GmbH
90411 Nürnberg (DE)

(72) Erfinder:
• Ilting, Thomas
  90429 Nürnberg (DE)
• Meissner, Jörg
  90518 Altdorf (DE)
• Schubert, Jürgen
  91154 Roth (DE)

(74) Vertreter:
Blumbach, Kramer & Partner GbR
Patentanwälte,
Sonnenberger Strasse 100
65193 Wiesbaden (DE)

(54) **Bussystem und Verfahren zur Datenübertragung**

(57) Das Bussystem (2) zur Datenübertragung innerhalb eines Master-Slave-Systems (1) umfaßt einen parallelen Datenbus (3) und einen seriellen Datenbus (4, 5) sowie mindestens eine Steuerleitung (15, 16) für ein die Übertragungsart bestimmendes Steuersignal (SnP, RnW), wobei jeder Slave ($S_{1...n}$) an einen dessen Schnittstelle ($SIF_p$, $SIF_s$) entsprechenden Datenbus (3; 4, 5) anschließbar und hinsichtlich der Übertragungsart ansteuerbar ist. Bei der Datenübertragung sowohl serieller Daten (SD) als auch paralleler Daten (PD) wird mit Adressierung des oder jedes Slaves ($S_n$) ein erstes Steuersignal (Serial, not Parallel) für die Übertragungsform gesetzt, bevor ein Strobesignal (STRB) zur Datenübertragung aktiviert wird. Zur Bestimmung eines Schreib- oder Lesezugriffs wird ein weiteres Steuersignal (RnW) für die Übertragungsrichtung (Read, not Write) gesetzt.

Fig. 1

EP 0 848 520 A1

## Beschreibung

Die Erfindung bezieht sich auf ein Bussystem zur Datenübertragung innerhalb eines Master-Slave-Systems. Sie bezieht sich weiter auf ein Verfahren zur Übertragung von insbesondere digitalen Daten mittels eines derartigen Bussystems.

Ein Bussystem dient zur Übertragung insbesondere digitaler Daten zum Einstellen und zur Zustandsprüfung unterschiedlicher funktionaler Untereinheiten. Zu diesem Zweck verbindet das Bussystem die funktionalen Untereinheiten, von denen eine Master ist, während die übrigen Untereinheiten Slaves sind (Single Master Bus). Die funktionalen Untereinheiten oder Slaves befinden sich häufig nicht nur auf unterschiedlichen Leiterplatten, sondern weisen in der Regel auch Schnittstellen für verschiedene Übertragungsarten auf. So können einige der Slaves jeweils eine Schnittstelle für eine parallele Datenübertragung aufweisen, während die anderen Slaves jeweils eine Schnittstelle für eine serielle Datenübertragung aufweisen. Auch können die Slaves oder deren Schnittstellen für verschiedene Übertragungsrichtungen ausgelegt sein, d. h. bidirektional oder unidirektional und entweder für einen Schreibzugriff oder für einen Lesezugriff.

Innerhalb einer Hochfrequenz (HF)- Sende- und -Empfangseinheit (Radio Frequency Unit, RFU) einer Basisstation (Base Transceiver Station, BTS) für den Mobilfunk nach GSM-Standard (Global Systems for Mobile Communication) wird zur Übertragung von Kontroll- und Statusdaten jedoch üblicherweise jeder Slave über eine direkte physikalische Verbindung an den Master angeschlossen, damit der Master zu jedem Slave Daten schreiben (senden) und von diesem Daten lesen (empfangen) kann. Bei einer derartigen, aus Punkt - zu Punkt - Verbindungen bestehenden sternförmigen Struktur weist der Master oder dessen steuernder Prozessor für jede Untereinheit oder für jeden Slave eine separate Schnittstelle auf. Dies verursacht jedoch eine besonders hohe Prozessorlast bei einer regelmäßigen Ansteuerung der verschiedenen Schnittstellen. Darüber hinaus ist die Verbindung der Slaves mit dem Master besonders aufwendig. Änderungen einzelner Untereinheiten oder eine Erweiterung des Systems um zusätzliche Untereinheiten sind aufgrund der erforderlichen Anpassungen innerhalb des Systems nicht oder nur mit erheblichem Aufwand möglich.

Bei Einsatz eines parallelen Datenbusses erfordert der Anschluß eines Slaves mit serieller Schnittstelle zusätzliche Schaltkreise zur Anpassung an das Bussystem. Entsprechend erfordert bei Verwendung eines seriellen Datenbusses der Anschluß eines mit paralleler Schnittstelle zusätzliche Schaltkreise zur Busanpassung. Der Einsatz zusätzlicher Schaltkreise und Signalleitungen führt zu einem erheblichen Aufwand.

Der Erfindung liegt daher die Aufgabe zugrunde, ein Bussystem zur Datenübertragung innerhalb eines Master-Slave-Systems anzugeben, das mit möglichst geringem Aufwand unterschiedliche Übertragungsarten von Daten ermöglicht, wobei sowohl serielle als auch parallele Daten übertragbar sein sollen. Darüber hinaus soll ein entsprechendes Verfahren zur Datenübertragung angegeben werden.

Bezüglich des Bussystems wird diese Aufgabe gelöst durch die Merkmale des Anspruchs 1. Dabei weist das Bussystem sowohl einen parallelen Datenbus als auch einen seriellen Datenbus auf. Das Bussystem umfaßt außerdem mindestens eine Steuerleitung für ein die Übertragungsart, d. h. die Übertragungsform (seriell oder parallel) und/oder die Übertragungsrichtung (lesen oder schreiben), der Daten bestimmendes Steuersignal. Jeder Slave ist dann über dessen spezielle Schnittstelle an einen deren Übertragungsform entsprechenden Datenbus anschließbar.

Die Erfindung geht dabei von der Überlegung aus, daß eine Vielzahl funktionaler Untereinheiten dann unabhängig von deren Schnittstelle oder Übertragungsform Busteilnehmer eines gemeinsamen Bussystems sein können, wenn ein paralleler Datenbus und ein serieller Datenbus zu einem Bussystem kombiniert werden können. Diese Kombination wäre in einfacher Weise realisierbar, wenn die für einen parallelen und einen seriellen Datenbus erforderlichen Sammelleitungen für eine physikalische Verbindung der Busteilnehmer untereinander um lediglich eine Anzahl von Steuerleitungen zur Steuerung der jeweiligen Übertragungsart ergänzt werden. Somit wäre sowohl für einen Master als auch für eine beliebige Anzahl von Slaves innerhalb eines Master-Slave-Systems jeweils nur eine Schnittstelle zum Bussystem erforderlich. Lediglich der Master müßte als zusätzliche Aufgabe die Steuerung der jeweiligen Übertragungsart in Form und Richtung während eines Buszyklus übernehmen.

Zur Adressierung des oder jedes Slaves ist zweckmäßigerweise ein paralleler Adressbus mit einer Anzahl von Adressleitungen, z. B. mit sieben Adressleitungen, vorgesehen. Der parallele Datenbus umfaßt vorzugsweise acht Datenleitungen, so daß bei digitaler Datenübertragung acht (8) Bits oder ein (1) Byte gleichzeitig übertragen werden können. Der serielle Datenbus umfaßt zweckmäßigerweise zusätzlich zu einer Signalleitung für die seriellen Daten eine Steuerleitung für ein Taktsignal. Mittels dieses Taktsignals werden bei einer seriellen Übertragung von digitalen Daten alle Bits, z. B. mit Beginn des höchstwertigen Bits, einzeln getaktet.

Um Daten aus Sicht des Masters sowohl lesen als auch schreiben zu können, umfaßt das Bussystem in zweckmäßiger Ausgestaltung zusätzlich zu einer separaten Steuerleitung für ein die Übertragungsform der Daten bestimmendes Steuersignal eine separate Steuerleitung für ein die Übertragungsrichtung der Daten innerhalb des Master-Slave-Systems bestimmendes Steuersignal. Innerhalb eines durch ein derartiges Steuersignal für die Übertragungsrichtung definierten Lese- oder Schreibzyklus wird ein weiteres Steuersignal in Form eines separaten Übernahme- oder Strobesignals aktiviert, das über eine weitere Steuerleitung des Bussystems geführt wird. Das Bussystem weist in weiterer zweckmäßiger Ausgestaltung eine allen Slaves gemeinsame Bus-Master-Schnittstelle auf. Für einen Wechsel von einer Übertragungsform in die andere Übertragungsform und damit zur Umwandlung serieller Daten in parallele Daten und umgekehrt ist dem Master vorteilhafterweise ein entsprechender Wandler zugeordnet. Innerhalb des Masters kann dann dieser Wandler über einen internen Datenbus mit einem Prozessor des Masters verbunden sein. Ein vorzugsweise paralleles Interface dieses Prozessors ist dann die Schnittstelle des Masters zum Bussystem. Das Prozessor-Interface entkoppelt diesen und das Bussystem derart, daß einerseits der Prozessor mit seiner maximalen Geschwindigkeit auf das Bussystem zugreifen kann, und daß andererseits das Bussystem mit einer möglichst geringen Übertragungsrate arbeiten kann. Der Prozessor wird daher nicht gebremst.

Bezüglich des Verfahrens wird die genannt Aufgabe gelöst durch die Merkmale des Anspruchs 9. Vorteilhafte Weiterbildungen sind Gegenstand der auf diesen rückbezogenen Unteransprüche.

Über das Bussystem können Daten sowohl in serieller als auch in paralleler Form übertragen werden. Dabei können die Daten aus der Sicht des Masters unabhängig von dessen Übertragungsform, d.h. unabhängig davon, ob die Daten in serieller oder in paralleler Form übertragen werden, sowohl zu den Slaves geschrieben als auch von diesen gelesen werden. Dazu wird vor, nach oder mit einer Adresse für den oder jeden Slave zunächst ein Steuersignal für die Übertragungsform (Serial, not Parallel) gesetzt. Vorher, Gleichzeitig oder anschließend wird ein die Übertragungsrichtung definierendes Steuersignal (Read, not Write) gesetzt, so daß dann der oder jeder zur Datenübertragung adressierte Slave hinsichtlich der Übertragungsart eindeutig bestimmt ist.

Sind die Adressierungssignale sowie die die Übertragungsrichtung und die Übertragungsform bestimmenden Steuersignale stabil, so wird ein weiteres Steuersignal oder Srobesignal aktiviert. Dieses steuert einerseits die Datenbereitstellung auf dem Bussystem sowie andererseits die Datenübernahme vom Bussystem. Dabei wird zweckmäßigerweise eine erste, vorzugsweise fallende Flanke des Strobesignals zur Datenbereitstellung herangezogen, während eine nach einer Zeitspanne folgende, zur ersten Flanke inverse zweite Flanke des Strobesignals zur Datenübernahme herangezogen wird.

Bei einem Zugriff, insbesondere bei einem Schreibzugriff, auf den seriellen Datenbus des Bussystems (serieller Schreibzyklus) wird ein entsprechendes Taktsignal (Seriell Clock) gesetzt. Dabei werden bei einem seriellen Schreibzyklus die über den seriellen Datenbus geführten seriellen Daten vom Master getrieben. Analog werden beim seriellen Lesezyklus die seriellen Daten vom jeweiligen Slave getrieben. Auch beim seriellen Lesen wird ein entsprechendes Taktsignal generiert.

Bei einem Lesezugriff auf den parallelen Datenbus (paralleler Lesezyklus) werden zunächst ein Adreßsignal sowie Steuersignale für die Übertragungsart gesetzt, wobei diese Signale vom Master getrieben werden. Sind diese Signale stabil, so aktiviert der Master für eine bestimmte Zeitspanne das Strobesignal zur Datenübergabe vom adressierten Slave über das Bussystem zum Master. Dabei sind die vom Slave auf den parallelen Datenbus getriebenen Daten rechtzeitig vor der zweiten steigenden Flanke des Strobesignals gültige, so daß der Master die Daten mit dieser Flanke übernehmen kann. Anschließend muß der Slave den parallelen Datenbus nicht mehr treiben und der Master kann die Adresse ändern sowie den nächsten Buszyklus starten. Im parallelen Lesezyklus ist das Taktsignal für einen seriellen Datenzugriff vorzugsweise konstant, z. B. LOW (logisch 0). Auch wird zweckmäßigerweise auf den seriellen Datenbus ein konstantes Signal z. B. HIGH (logisch 1) oder LOW, geführt.

Bei einem Schreibzugriff auf den parallelen Datenbus (paralleler Schreibzyklus) und damit auf einen Slave mit einer parallelen Schnittstelle werden wiederum zunächst entsprechende Adreßsignale und ein Steuersignal für die Übertragungsform gesetzt. Außerdem wird ein entsprechendes Steuersignal für die Übertragungsrichtung gesetzt, so daß nun eine Verbindung zwischen dem Master und dem oder jedem adressierten Slave über das Bussystem eindeutig definiert ist. Sind diese Steuersignale stabil, so aktiviert der Master wiederum das Strobesignal für eine bestimmte Zeitspanne zur Datenübergabe vom Master zum adressierten Slave. Nachdem der Master dieses Strobesignal zurückgenommen hat, kann er die Adresse ändern und den nächsten Buszyklus starten. Dabei ist ein paralleler oder ein serieller Schreibzyklus möglich. Bei dieser parallelen Übertragung treibt der Master nach Aktivierung des Strobesignals einen gültigen Wert oder ein gültiges Datum auf dem parallelen Datenbus des Bussystems. Dieser Wert oder dieses Datum bleibt zweckmäßigerweise noch eine gewisse Zeit nach einer Deaktivierung des Strobesignals zur Datenübergabe stabil, so daß der adressierte Slave die Daten mit wiederum der steigenden Flanke des Srobesignals übernehmen kann. Auch beim parallelen Schreibzyklus ist über die gesamte Zykluszeit das Taktsignal für einen seriellen Datenzugriff konstant, z. B. LOW. Ebenso ist wiederum auf dem seriellen Datenbus ein konstantes Signal, z. B. HIGH oder LOW, gesetzt.

Beim seriellen Schreiben generiert der Master während der Aktivierung des Strobesignals zur Datenübergabe ein Taktsignal für einen seriellen Datenzugriff mit vorzugsweise acht (8) Taktimpulsen und in der Umgebung deren positiven Flanken stabile Werte auf der Datenleitung des seriellen Datenbusses. Dabei stellt vorzugsweise der Wert in der Umgebung der steigenden Flanke des ersten Taktimpulses das höchstwertige Bit dar. Über den gesamten seriellen Schreibzyklus bleibt der parallele Datenbus vorzugsweise ungetrieben. Während einer seriellen Datenübertragung kann ein konstanter Signalpegel, z. B. HIGH, gesetzt werden.

Die mit der Erfindung erzielten Vorteile bestehen insbesondere darin, daß mit einem aus einem parallelen Datenbus und einem seriellen Datenbus aufgebauten Bussystem innerhalb eines Master-Slave-Systems eine Übertragung sowohl paralleler Daten als auch serieller Daten möglich ist. Die Slaves können an dasselbe Bussystems angeschlossen werden, wobei sie entsprechend ihrer Schnittstelle entweder an den seriellen oder den parallelen Datenbus anschließbar sind. Zur Übertragung paralleler oder serieller Daten sind die über entsprechend parallele bzw. serielle Schnittstellen an das Bussystem anschließbaren Slaves in einfacher Weise über dasselbe Bussystem sowohl entsprechend der jeweiligen Übertragungsform als auch der jeweiligen Übertragungsrichtung ansteuerbar, so daß in jedem Buszyklus lediglich der oder jeder adressierte und hinsichtlich der Übertragungsart definierte Slave aktiviert ist. Hinsichtlich der Adressierung ist das Bussystem somit ebenso einfach wie ein herkömmlicher Datenbus. Im Gegensatz zu einem reinen seriellen oder einem reinen parallelen Datenbus ermöglicht dieses Bussystem jedoch die Verbindung vieler sowohl funktional verschiedener als auch hinsichtlich der Übertragungsart unterschiedlicher Busteilnehmer.

Da innerhalb des Masters ein Prozessor lediglich eine einzige Schnittstelle zum Bussystem bedienen muß, kann dieser mit maximaler Geschwindigkeit arbeiten, wobei die Schnittstelle eine Anpassung an unterschiedliche Geschwindigkeiten auf dem Bussystem vornimmt. Dabei sind die Geschwindigkeiten und die Zeitpunkte des Prozessors und des Bussystems voneinander unabhängig, so daß der im Vergleich zum Bussystem schnelle Master-Prozessor Daten in kurzer Zeit schreiben kann. Die Daten werden anschließend von der Schnittstelle des Masters nach und nach über das langsame Bussystem übertragen. Entsprechend erfolgt beim Lesen eine Geschwindigkeitsanpassung in umgekehrter Richtung von dem oder jedem Slave zum Master. Da das Bussystem aus einer geringen Anzahl physikalischer Verbindungen aufgebaut ist werden insgesamt nur wenige Bauteile benötigt. Die Programmierung des Master-Slave-Systems ist darüber hinaus besonders einfach, da der Master-Prozessor nur eine Schnittstelle zum Bussystem bedienen muß. Eine Erweiterung des Systems um weitere Untereinheiten ist lediglich begrenzt durch die Anzahl darstellbarer Adressen. Bei Verwendung eines parallelen Adressbusses mit einer Anzahl von n Leitungen sind bei einem binären System $2^n$ Adressen darstellbar und somit $2^n$ Slaves an das Bussystem anschließbar.

Ein Ausführungsbeispiel der Erfindung wird anhand einer Zeichnung näher erläutert. Darin zeigen:

Fig. 1    schematisch ein Bussystem zur Datenübertragung innerhalb eines Master-Slave-Systems mit einem parallelen und einem seriellen Datenbus,

Fig. 2    schematisch das Bussystem gemäß Fig. 1 mit einer Anzahl von Daten- und Steuerleitungen,

Fig. 3    einen Buszyklus mit parallelem Lesezugriff,

Fig. 4    einen weiteren Buszyklus mit parallelem Schreibzugriff und

Fig. 5    ferner einen Buszyklus mit seriellem Schreibzugriff.

Einander entsprechende Teile sind in allen Figuren mit den gleichen Bezugszeichen versehen.

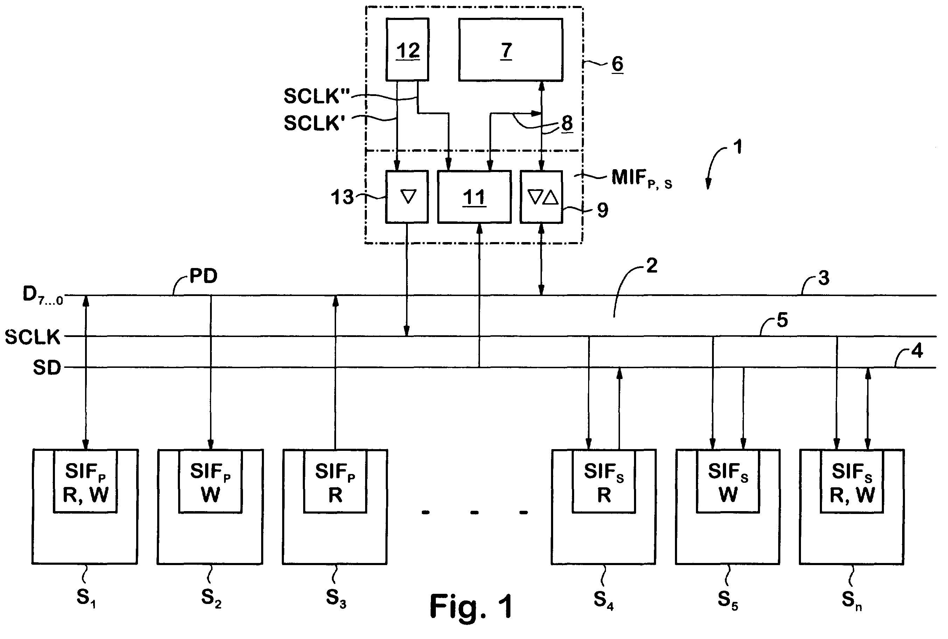

Fig. 1 zeigt in einem Master-Slave-System 1 ein Bussystem 2, daß aus einem parallelen Datenbus 3 und einem synchronen seriellen Datenbus 4 aufgebaut ist. Dem seriellen Datenbus 4 ist eine Taktsignalleitung 5 für ein Taktsignal (Serial Clock) SCLK zugeordnet. Der parallele Datenbus 3 dient zur Übertragung paralleler Daten PD und ist im Ausführungsbeispiel aus acht Datenleitungen $D_{7...0}$ aufgebaut. Der serielle Datenbus 4 dient zur Übertragung serieller Daten SD. Die Datenübertragung erfolgt entweder parallel in Form von acht (8) Bits gleichzeitig auf den acht Datenleitungen $D_{7...0}$ des parallelen Datenbusses 3 oder seriell in Form von acht (8) Bits nacheinander auf der Datenleitung 4 des seriellen Datenbusses 4, 5.

Der Master 6 des Master-Slave-Systems 1 umfaßt einen Prozessor 7 und einen eigenen internen parallelen Datenbus 8 mit mindestens acht, vorzugsweise mit sechzehn oder zweiunddreißig, Datenleitungen. Zur Ankopplung des internen Datenbus 8 des Masters 6 an das Bussystem 2 weist dieser eine Schnittstelle oder ein Interface $MIF_{p,s}$ auf. Der interne Datenbus 8 des Masters 6 steht über einen bidirektionalen Buffer 9 dieser Schnittstelle $MIF_{p,s}$ einerseits mit dem parallelen Datenbus 3 in Verbindung. Er steht andererseits über einen Wandler 11 der Schnittstelle $MIF_{p,s}$ zur Umwandlung einer Datenform in die andere Datenform mit dem seriellen Datenbus 4 in Verbindung. Innerhalb des Masters 6 sind in nicht näher dargestellter Art und Weise sogenannte FIFO-Speichern (first in, first out) vorgesehen, die üblicherweise durch Flip-Flops realisiert sind. Die FIFO's weisen eine Eingangsseite und eine Ausgangsseite sowie eine Anzahl von Speicherzellen auf. An der Ausgangsseite können Daten aus den Speicherzellen gelesen werden, jedoch nur in der Reihenfolge, in der diese an der Eingangsseite hineingeschrieben wurden. Die Geschwindigkeiten und Zeitpunkte des Lesens und des Schreibens auf dem internen Datenbus 8 einerseits und auf dem Bussystem 2 andererseits sind dabei voneinander unabhängig. Dadurch kann der schnelle Prozessor 7 des Masters 6 Daten in kurzer Zeit schreiben, die von der Steuerung des Master-Interfaces $MIF_{p,s}$ anschließend nach und nach über das vergleichsweise langsame Bussystem 2 geschrieben werden. Entsprechend erfolgt die Geschwindigkeitsanpassung in umgekehrter Richtung.

Im Gegensatz zum Master 6, der nur eine Schnittstelle MIF$_{p,s}$ sowohl zum parallelen Datenbus 3 als auch zum seriellen Datenbus 4 des Bussystems 2 aufweist, weist jeder Slave S$_{1...n}$ eine Schnittstelle SIF$_{p,s}$ zum parallelen Datenbus 3 oder zum seriellen Datenbus 4 auf. Weiterhin kann ein Slave S$_{1...n}$ sowohl eine parallele Schnittstelle SIF$_p$ als auch eine serielle Schnittstelle SIF$_s$ aufweisen. Ferner kann die Datenübertragung vom parallelen Datenbus 3 zu einem Slave S$_{1...3}$ mit paralleler Schnittstelle SIF$_p$ bidirektional oder unidirektional erfolgen. Bei unidirektionaler Übertragung paralleler Daten PD können aus der Sicht des Masters 6 parallele Daten PD entweder zu einem Slave S$_2$ geschrieben oder von einem Slave S$_3$ gelesen werden. Ebenso kann die Übertragung serieller Daten SD vom seriellen Datenbus 4 zu den Slaves S$_{4...n}$ mit serieller Schnittstelle SIF$_s$ bidirektional oder unidirektional erfolgen. Bei der seriellen Datenübertragung wird jedem Slave S$_{4...n}$ mit serieller Schnittstelle SIF$_s$ zusätzlich über die Signalleitung 5 das Taktsignal SCLK übertragen. Dazu wird im Master 6 von einem Taktgeber 12 ein Taktsignal SCLK' erzeugt, das über einen unidirektionalen Buffer 13 geführt und als Taktsignal SCLK auf die Signalleitung 5 gelegt wird.

Serielle Lesedaten (Read) R aus den Slaves S$_4$ und S$_n$ werden im Wandler 11 in parallele Daten umgewandelt und über den internen Datenbus 10 dem Mikroprozessor 7 zur weiteren Verarbeitung zugeführt. Analog werden vom Prozessor 7 des Masters 6 erzeugte und den Slaves S$_5$ und/oder S$_n$ zuzuführende parallele Daten zunächst im Wandler 11 in serielle Daten umgewandelt. Zur Umwandlung der Daten von einer Übertragungsform in die andere Übertragungsform wird dem Wandler 11 ein im Taktgeber 12 erzeugtes Taktsignal SCLK'' direkt zugeführt.

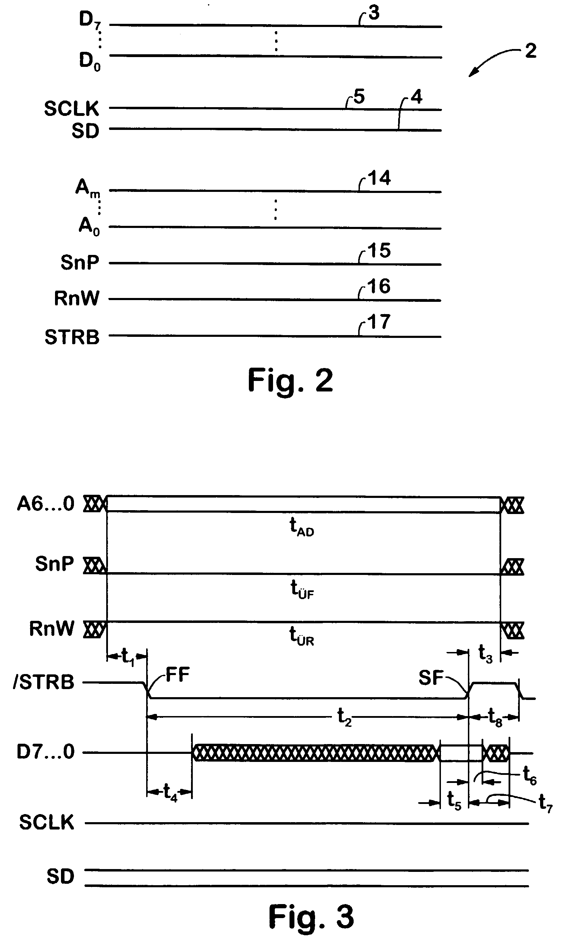

Fig. 2 zeigt das Bussystem 2 mit einer Anzahl von Steuerleitungen zur Adressierung und Bestimmung der Übertragungsart während eines Buszyklus. Zusätzlich zum parallelen Datenbus 3 mit den Datenleitungen D$_{7...0}$ ist ein Adressbus 14 mit einer Anzahl von Adressleitungen A$_{m...0}$ zur Adressierung der Slaves S$_{1...n}$, vorgesehen, wobei die Anzahl der Adressleitungen A$_m$... A$_0$ gemäß der Beziehung n = 2$^{m+1}$ bestimmt ist, wenn n die Anzahl der Slaves S$_{1...n}$ ist. Zur Bestimmung der Übertragungsart der Daten sind eine erste Steuerleitung 15 und eine zweite Steuerleitung 16 vorgesehen. Dabei gibt ein über die Steuerleitung 15 geführtes Steuersignal SnP (Serial, not Parallel) an, ob die Daten in serieller oder in paralleler Form übertragen werden. Ein über die Steuerleitung 16 geführtes Steuersignal RnW (Read, not Write) gibt an, ob aus der Sicht des Masters 6 Daten vom Slave S$_n$ empfangen oder an diesen gesendet werden. Die Steuersignale SnP und RnW werden in digitaler Form als HIGH- oder LOW-Pegel über die Steuerleitungen 15 bzw. 16 geführt. Eine Steuerleitung 17 dient zur Übertragung eines Übernahme- oder Strobesignals STRB für einen Buszyklus.

Im Ausführungsbeispiel ist "not" Indikator für den LOW-Pegel, so daß einem seriellen Port der Signalpegel SnP = 1 und einem parallelen Port der Signalpegel SnP = 0 zugeordnet sind. Analog sind einem Leseport der Signalpegel RnW = 1 und einem Schreibport der Signalpegel RnW = 0 zugeordnet, so daß ein über den Adressbus 14 adressierter Slave S$_n$ durch die Kombination der Signalpegel SnP und RnW eindeutig bestimmt ist. So definiert die Signalkombination SnP, RnW = 0,0 einen Schreibzugriff auf einen parallelen Port, während die Kombination SnP, RnW = 0,1 einen Lesezugriff auf einen parallelen Port definiert. Ein Schreibzugriff auf einen seriellen Port ist durch die Signalkombination SnP, RnW = 1,0 bestimmt.

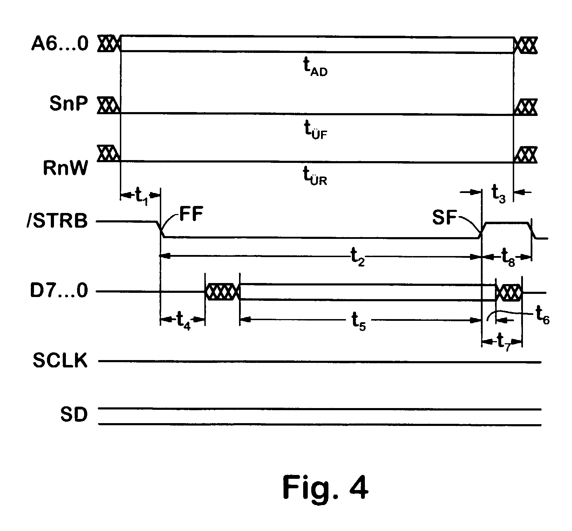

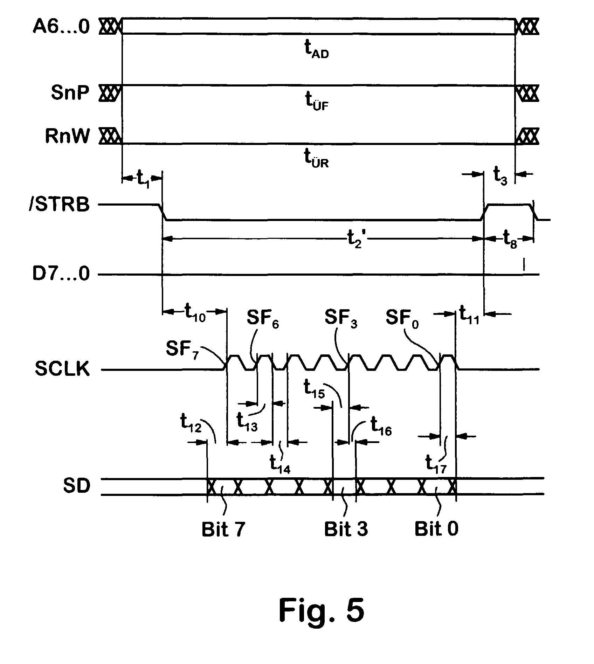

Derartige Buszyklen sind in den Figuren 3 bis 5 dargestellt. Dabei zeigt Fig. 3 einen für einen parallelen Lesezugriff charakteristischen Buszyklus, während in den Figuren 4 und 5 ein für einen parallelen Schreibzugriff bzw. ein für einen seriellen Schreibzugriff charakteristischer Buszyklus dargestellt ist. Gemäß Fig. 3 ist für einen parallelen Lesezugriff bei einer über den Adressbus 14 ausgewählten Adresse mit einer Zykluszeit t$_{AD}$ das Steuersignal SnP für die Übertragungsform auf LOW gesetzt, während das Steuersignal RnW für die Übertragungsrichtung auf HIGH gesetzt ist. Die Zykluszeiten t$_{ÜF}$ und t$_{ÜR}$ für die Steuersignale SnP bzw. RnW entsprechen der Zykluszeit t$_{AD}$. Mittels des Strobesignals STRB wird die Datenübertragung des Bussystems 2 zeitlich bestimmt. Dabei findet die Bereitstellung der Daten, z. B. vom adressierten Slave S$_3$ mit paralleler Schnittstelle SIF$_p$, an den parallelen Datenbus 3 infolge der fallenden Flanke FF des Steuer- oder Strobesignals STRB statt, während nach einer Impulsdauer t$_2$ die Datenübernahme vom parallelen Datenbus 3, hier durch den Master 6, mit der steigenden Flanke SF des Strobesignals STRB erfolgt. Hierzu legt die Zeit t$_1$ eine Mindestzeit für einen stabilen Zustand der Steuersignale SnP und RnW sowie des Signalpegels auf dem Adressbus A$_{6...0}$ fest, nach deren Ablauf die fallende Flanke FF des Strobesignals STRB kommen darf. Die Bereitstellung der Daten PD und das damit verbundene Treiben der parallelen Datenleitungen D$_{7...0}$ des parallelen Datenbusses 3 durch den Slave S$_3$ beginnt frühestens nach einer Zeitspanne t$_4$. Dabei kann der Signalpegel auf dem hier aus sieben Adressleitungen aufgebauten Adressbus A$_{6...0}$ entweder HIGH oder LOW sein. Außerhalb der Zykluszeiten t$_{AD}$, t$_{ÜF}$, t$_{ÜR}$ können sich der Signalpegel des Adressbusses A$_{6...0}$ und die Steuersignale SnP sowie RnW in einem unbestimmten Zustand befinden.

Obwohl die Daten PD auf dem parallelen Datenbus 3 mit den Datenleitungen D$_{7...0}$ nicht während der gesamten Impulsdauer t$_2$ des Strobesignals STRB einen bestimmten Zustand aufweisen müssen, müssen diese während eines sich aus einer Setup-Zeit t$_5$ und einer Hold-Zeit t$_6$ zusammensetzenden Zeitraums um die steigende Flanke SF herum stabil sein. Die Zeit t$_3$ gibt den zeitlichen Abstand zwischen der steigenden Flanke SF des Strobesignals STRB und dem Ende der Zykluszeiten $t_{AD}$, $t_{\ddot{U}F}$ und $t_{\ddot{U}R}$ an. Ein Zeitraum $t_7$ legt fest, wann spätestens nach der steigenden Flanke SF die Bereitstellung der Daten PD und das damit verbundene Treiben der parallelen Datenleitungen $D_{7...0}$ des parallelen Datenbusses 3 beendet sein muß. Ein Zeitraum $t_8$ legt fest, wann frühestens nach der steigenden Flanke SF die fallende Flanke FF des zum nachfolgenden Buszyklus gehörenden Strobesignals STRB auftreten darf. Durch die Zeitdauern $t_4$, $t_7$ und $t_8$ wird gewährleistet, daß nur der adressierte Slave $S_3$ den Signalpegel auf den parallelen Datenleitungen $D_{7...0}$ treibt. Somit sind Kollisionen mit einem Slave $S_{1...n}$ oder dem Master 6, der diese Datenleitungen $D_{7...0}$ im vorangegangenen parallelen Buszyklus getrieben hat oder im nachfolgenden parallelen Buszyklus treibt, ausgeschlossen. Das Taktsignal SCLK ist über den gesamten parallelen Lesezyklus konstant LOW. Auf dem seriellen Datenbus 4 kann das Signal SD konstant HIGH oder LOW sein. Beim parallelen Lesezyklus oder Lesezugriff steuert und treibt der Master 6 den Adressbus $A_{6...0}$ sowie die Steuersignale SnP und RnW. Der Master 6 übernimmt außerdem die Steuerung des Strobesignals STRB. Der adressierte Slave $S_3$ treibt die Datenleitungen $D_{7...0}$ des parallelen Datenbusses 3. Somit gibt die Summe aus den Zeiträumen $t_1$ bis $t_3$ die Zykluszeiten $t_{AD}$, $t_{\ddot{U}F}$, $t_{\ddot{U}R}$ an.

Der parallele Schreibzyklus oder Schreibzugriff gemäß Fig. 4 unterscheidet sich vom parallelen Lesezyklus gemäß Fig. 3 im wesentlichen im Hinblick auf die Rollenverteilung zwischen Master 6 und Slaves $S_{1...n}$. Die Datenbereitstellung, hier vom Master 6, an den parallelen Datenbus 3 erfolgt wiederum nach der fallenden Flanke FF des Strobesignals STRB, während die Datenübernahme vom parallelen Datenbus 3, hier durch den Slave $S_2$, mit der steigenden Flanke SF des Strobesignals STRB erfolgt. Innerhalb eines sich aus einer Setup-Zeit $t_5$ und einer Hold-Zeit $t_6$ zusammensetzenden Zeitraums um die steigende Flanke SF herum müssen die vom Master 6 gelieferten Daten gültig sein, damit beim parallelen Schreibzyklus eine definierte Datenübergabe vom parallelen Datenbus 3 zum Slave $S_2$ erfolgen kann. Während das Steuersignal SnP beim parallelen Schreibzyklus wiederum LOW gesetzt ist, ist im Gegensatz zum parallelen Lesezyklus beim parallelen Schreibzyklus das Steuersignal RnW auf LOW gesetzt.

Beim seriellen Schreibzyklus oder Schreibzugriff gemäß Fig. 5 ist das Steuersignal SnP auf HIGH gesetzt, während das Steuersignal RnW wiederum auf LOW gesetzt ist. Das Strobesignal STRB unterscheidet sich gegenüber einem parallelen Zyklus oder Zugriff durch die Impulsdauer $t'_2$, die beim seriellen Schreibzyklus durch die zeitliche Länge eines übertragenen Bytes mit acht (8) Bits $BIT_{7...0}$ bestimmt ist. Bei der seriellen Datenübertragung, d.h. sowohl beim seriellen Lesen als auch beim seriellen Schreiben, wird ein Taktsignal SCLK (Serial Clock) mit acht steigenden sowie acht fallenden Flanken gesetzt und zusammen mit den seriellen Daten SD übertragen. Bei der ersten steigenden Flanke $SF_7$ des Taktsignals SCLK ist der Wert oder das Datum SD (logisch 0 oder logisch 1) auf dem seriellen Datenbus 4 dem Bit 7 zugeordnet. Während $t_{10}$ einen Zeitraum nach der fallenden Flanke FF des Strobesignals STRB angibt, nach dem die Aktivität des Taktsignals SCLK frühestens beginnt, gibt $t_{11}$ einen Zeitraum vor der steigenden Flanke FF des Strobesignals STRB an, bis zu dem die Aktivität beendet sein muß. Ein Zeitraum $t_{12}$ legt fest, ab wann der Signalpegel auf dem seriellen Datenbus 4 sich ändern darf. Zeiträume $t_{13}$ und $t_{14}$ legen die Pulsbreiten des Taktsignals SCLK fest. Die zweite steigende Flanke $SF_6$ ist dem Bit 6 des seriellen Wertes SD zugeordnet. Eine analoge Zuordnung erfolgt zu den übrigen Bits bis zum Bit 0, dem die steigende Flanke $SF_0$ des Taktsignals SCLK zugeordnet ist. Definierte Setup-Zeiten $t_{15}$ und Hold-Zeiten $t_{16}$ für die seriellen Daten SD gegenüber der steigenden Flanke SF des Taktsignals SCLK sind beispielhaft für das Bit 3 eingezeichnet. Ein Zeitraum $t_{17}$ beschreibt, ab wann der Signalpegel auf dem seriellen Datenbus 4 wieder konstant sein muß. Während des seriellen Schreib- oder Lesezugriffs werden die Datenleitungen $D_{7...0}$ des parallelen Datenbusses 3 nicht getrieben.

Das Bussystem 2 ermöglicht die permanente Übertragung digitaler Daten PD, SD zum Einstellen und zur Zustandüberprüfung sehr unterschiedlicher funktionaler Untereinheiten (Master 6 und Slaves $S_{1...n}$) innerhalb einer (nicht dargestellten) Hochfrequenzsende- und Hochfrequenzempfangseinheit SRFU (Single Carrier Radio Frequency Unit) einer Basisstation BTS (Base Transceiver Station) für den Mobilfunk nach Standard GSM (Global Systems for Mobile Communication). Innerhalb einer solchen Einheit bildet das Bussystem 2 einen Übertragungsweg für Kontroll- und Statusdaten. Dabei dürfen sich die Untereinheiten oder Slaves $S_{1...n}$ in nicht näher dargestellter Art und Weise auf unterschiedlichen Leiterplatten befinden, wobei die Slaves $S_{1...n}$ direkt und somit ohne zusätzliche Schaltkreise zur Umwandlung der Übertragungsart an das Bussystem 2 angeschlossen werden können.

Bezugszeichenliste

| 1 | Master-Slave-System |
| 2 | Bussystem |
| 3 | paralleler Datenbus |
| 4 | serieller Datenbus |
| 5 | Taktsignalleitung |
| 6 | Master |
| 7 | Prozessor |
| 8 | interner paralleler Datenbus |
| 9 | bidirektionaler Buffer |
| 11 | Wandler |
| 12 | Taktgeber |
| 13 | unidirektionaler Buffer |

| 14 | Adressbus |
|---|---|
| 15-17 | Steuerleitung |
| $A_{m...0}$ | Adressleitungen |
| $D_{7...0}$ | parallele Datenleitungen |
| FF | fallende Flanke |
| PD | parallele Daten |
| $MIF_{p,s}$ | Master-Schnittstelle / -Interface |
| RnW | Steuersignal / Read, not Write |
| $S_{1...n}$ | Slave |
| SnP | Steuersignal / Serial, not Parallel |
| SCLK | Taktsignal / Serial Clock |
| SD | serielle Daten |
| STRB | Strobesignal |
| SF | steigende Fanke |
| $SIF_{p,s}$ | parallele bzw. serielle Slave-Schnittstelle / -Interface |
| $t_n$ | Buszykluszeiten |

**Patentansprüche**

1. Bussystem zur Datenübertragung innerhalb eines Master-Slave-Systems (1), mit einem parallelen Datenbus (3) und mit einem seriellen Datenbus (4) sowie mit mindestens einer Steuerleitung (15, 16) für ein die Übertragungsart der Daten bestimmendes Steuersignal (SnP, RnW), wobei jeder Slave ($S_{n...0}$) an einen dessen Schnittstelle ($SIF_p$, $SIF_s$) entsprechenden Datenbus (3, 4) anschließbar und hinsichtlich der Übertragungsart ansteuerbar ist.

2. Bussystem nach Anspruch 1, mit einem parallelen Adressbus (14) mit einer Anzahl von Adressleitungen ($A_{m...0}$) zur Adressierung des oder jedes Slaves ($S_{n...0}$).

3. Bussystem nach Anspruch 1 oder 2, dessen serieller Datenbus eine Signalleitung (4) für serielle Daten (SD) und eine Steuerleitung (5) für ein Taktsignal (SCLK) umfaßt.

4. Bussystem nach einem der Ansprüche 1 bis 3, mit einer Steuerleitung (15) für ein die Übertragungsform der Daten (SD, PD) innerhalb des Master-Slave-Systems (1) bestimmendes Signal (SnP).

5. Bussystem nach einem der Ansprüche 1 bis 4, mit einer Steuerleitung (16) für ein die Übertragungsrichtung der Daten (SD, PD) innerhalb des Master-Slave-Systems (1) bestimmendes Signal (RnW).

6. Bussystem nach einem der Ansprüche 1 bis 5, mit einer Steuerleitung (17) für ein Strobesignal (STRB).

7. Bussystem nach einem der Ansprüche 1 bis 6, mit einer gemeinsamen Bus-Master-Schnittstelle ($MIF_p$) für alle Slaves ($S_{n...0}$).

8. Bussystem nach einem der Ansprüche 1 bis 7, wobei zur Umwandlung serieller Daten (SD) in parallele Daten (PD) und umgekehrt ein dem Master (6) zugeordneter Wandler (11) vorgesehen ist.

9. Verfahren zur Datenübertragung innerhalb eines Master-Slave-Systems (1) mit einem einen parallelen Datenbus (3) und einen seriellen Datenbus (4) umfassenden Bussystem (2), bei dem mit einer Adressierung des oder jedes Slaves ($S_{n...0}$) ein erstes Steuersignal (SnP) für die Übertragungsform aktiviert wird, bevor ein weiteres Steuersignal (STRB) zur Datenübertragung gesetzt wird.

10. Verfahren nach Anspruch 9, bei dem ein zweites Steuersignal (RnW) für die Übertragungsrichtung gesetzt wird.

11. Verfahren nach Anspruch 9 oder 10, wobei eine erste Flanke (FF) des weiteren Steuersignals (STRB) zur Datenbereitstellung herangezogen wird, und wobei eine nach einer Zeitspanne ($t_2$, $t'_2$) folgende, zur ersten Flanke (FF) inverse zweite Flanke (SF) des weiteren Steuersignals (STRB) zur Datenübernahme herangezogen wird.

12. Verfahren nach einem der Ansprüche 9 bis 11, bei dem für einen Zugriff auf den seriellen Datenbus (4) ein Taktsignal (SCLK) erzeugt wird.

13. Verfahren nach einem der Ansprüche 10 bis 12, wobei das erste Steuersignal (SnP) für einen Schreibzugriff und das erste Steuersignal (SnP) für einen Lesezugriff auf den parallelen Datenbus (3) gleich sind, und wobei das zweite Steuersignal (RnW) für einen Schreibzugriff und das zweite Steuersignal (RnW) für einen Lesezugriff auf den parallelen Datenbus (3) zueinander invers sind.

14. Verfahren nach einem der Ansprüche 9 bis 13, bei dem in einem Lesezyklus oder in einem Schreibzyklus mit paralleler Datenübertragung auf dem seriellen Datenbus (4) ein konstanter Signalpegel (HIGH, LOW) gehalten wird.

15. Verfahren nach einem der Ansprüche 9 bis 14, bei dem in einem Lesezyklus oder in einem Schreibzyklus mit paralleler Datenübertragung auf einer Steuerleitung (5) des seriellen Datenbusses (4) ein konstanter Signalpegel (LOW) gehalten wird.

16. Verfahren nach einem der Ansprüche 9 bis 13, bei dem in einem Lesezyklus oder in einem Schreibzyklus mit serieller Datenübertragung der parallele Datenbus (3) hochohmig ist.

17. Verfahren nach Anspruch 16, wobei auf dem seriellen Datenbus (4) geführte Daten (SD) auch auf dem parallelen Datenbus (3) geführt werden.

18. Verfahren nach einem der Ansprüche 9 bis 17, bei dem sowohl ein Adressbus (14) als auch Steuerleitungen (15, 16) für das oder jedes die Übertragungsart definierende Steuersignal (SnP, RnW) vom Master (6) getrieben werden.

EP 0 848 520 A1

**Fig. 1**

D_7
⋮
D_0
3
2

SCLK
SD
5
4

A_m
⋮
A_0
14

SnP
15

RnW
16

STRB
17

# Fig. 2

A6...0

$t_{AD}$

SnP

$t_{ÜF}$

RnW

$t_{ÜR}$

$t_1$

/STRB
FF
SF
$t_3$

$t_2$
$t_8$

D7...0

$t_6$

$t_4$
$t_5$
$t_7$

SCLK

SD

# Fig. 3

Fig. 4

Fig. 5

| Europäisches Patentamt | EUROPÄISCHER RECHERCHENBERICHT | Nummer der Anmeldung EP 97 11 9136 |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP 0 466 590 A (ALCATEL BUSINESS SYSTEMS)<br>* Zusammenfassung *<br>* Spalte 1, Zeile 51 - Spalte 2, Zeile 10 *<br>* Abbildung 1 * | 1,9,10 | H04L12/40 |
| A | <br><br>* Spalte 1, Zeile 51 - Spalte 2, Zeile 10 *<br>* Spalte 3, Zeile 20-49 *<br>* Spalte 6, Zeile 11-14 * | 2,3,7, 12,16 | |
| Y | US 5 453 737 A (OPOCZYNSKI ADAM)<br>* Zusammenfassung *<br>* Spalte 2, Zeile 55-60 *<br>* Abbildung 1 * | 1,9,10 | |
| A | * Spalte 3, Zeile 47-57 * | 16 | |
| A | WO 91 03786 A (AUSPEX SYSTEMS INC)<br><br>* Zusammenfassung *<br>* Seite 4, Zeile 1-5 *<br>* Seite 8, Zeile 19-24 *<br>* Seite 11, Zeile 17 - Seite 12, Zeile 2 *<br>* Seite 22, Zeile 10-15 * | 1-3,6, 9-13,18 | RECHERCHIERTE SACHGEBIETE (Int.Cl.6)<br><br>G06F<br>H04L |
| A | US 4 728 930 A (GROTE KEVIN J ET AL)<br>* Zusammenfassung *<br>* Abbildung 1 * | 8 | |

Der vorliegende Recherchenbericht wurde für alle Patentansprüche erstellt

| Recherchenort | Abschlußdatum der Recherche | Prüfer |
|---|---|---|
| DEN HAAG | 6.April 1998 | Lázaro López, M |

EPO FORM 1503 03.82 (P04C03)